# EUROPEAN PATENT APPLICATION

(11) **EP 4 835 151 A1**
(43) Date of publication of application: **04.11.2026**
(21) Application number: 25172807.7
(22) Date of filing: 28.04.2025
(51) Int. Cl.: C25B 9/67, C25B 9/77, C25B 9/75, F28D 9/00, F28F 3/08, C25B 1/04, F28F 3/10

(54) **ASSEMBLY**

(71) Applicant: Alfa Laval Corporate AB, 221 00 Lund (SE)
(72) Inventor: ÅSTRAND, Tobias, 221 00 Lund (SE); SANDGREN, Martin, 221 00 Lund (SE); STÅLBRAND, Erik, 221 00 Lund (SE)
(74) Representative: Alfa Laval Attorneys

(57) **Abstract**

An assembly (0) comprising two corrugated heat transfer plates (7) and a membrane gasket arrangement (4) is provided. Each of the heat transfer plates (7) comprises a plurality of portholes (25, 27, 29, 33, 35, 37), a heat transfer area (45) and a membrane gasket arrangement groove (85). The membrane gasket arrangement (4) is arranged between the two heat transfer plates (7) and comprises a membrane (6) and a gasket (10), which gasket (10) is accommodated in the membrane gasket arrangement grooves (85) of the heat transfer plates (7). Further, the assembly (0) comprises an insulating layer (8) electrically insulating the heat transfer plates (7) from each other. The assembly (0) is characterized in that each of the heat transfer plates (7) has a plurality of holes (88) in an edge portion (61) arranged outside the membrane gasket arrangement groove (85). Further, the assembly (0) comprises a plurality of insulating pins (90). Each of the pins (90) extends through a respective one of said holes (88) of at least one of the two heat transfer plates (7) to fix the heat transfer plates (7) and the membrane gasket arrangement (4) in relation to each other.

## Description

### Technical Field

The invention relates to an assembly. The assembly may be comprised in an apparatus used for a heat generating process, such as electrolysis.

### Background Art

Electrolysis is a well known process of using electricity to chemically decompose an electrolyte. For example, electrolysis can be used to split water contained in an electrolyte into hydrogen and oxygen. During electrolysis, heat may be generated, which heat may have to be diverted for maintained electrolysis efficiency.

WO2024133652 discloses an apparatus used for producing hydrogen through alkaline water electrolysis. The apparatus comprises a plurality of aligned heat transfer plates serving as electrodes and defining, together with gasket arrangements and sealing arrangement positioned between the heat transfer plates, alternately arranged electrolysis channels and cooling channels. Even though this apparatus functions properly and produces the required amount of hydrogen, there is still room for improvement of the construction of the apparatus.

### Summary

An object of the present invention is to provide an assembly that facilitates assembly of a hydrogen producing apparatus comprising said assembly. The basic concept of the invention is to offer an assembly comprising components which are fixed to each other in a smart way such that they maintain their correct positioning in relation to each other when the assembly is mounted in the hydrogen producing apparatus.

Thus, as is clear from the above, the assembly according to the invention may be used in an apparatus for production of hydrogen.

Since the assembly according to the invention is not arranged for use on its own, but as a part of an apparatus as described above, the advantages of different features and embodiments of the assembly appear first when the assembly is installed in the apparatus.

An assembly according to the invention comprises two corrugated heat transfer plates and a membrane gasket arrangement. Each of the heat transfer plates includes a first end portion, an intermediate portion and a second end portion arranged in succession along a respective longitudinal center axis of the heat transfer plate. Each of the heat transfer plates further comprises at least three portholes arranged within the first end portion, at least three portholes arranged within the second end portion, two transfer holes arranged on opposite sides of a respective transverse center axis of the heat transfer plate, a heat transfer area arranged within the intermediate portion, and a membrane gasket arrangement groove. The membrane gasket arrangement groove comprises an annular field groove portion, which encloses the heat transfer area and the transfer holes, and at least six annular ring groove portions arranged on an outside of the field portion and enclosing a respective one of the portholes. The membrane gasket arrangement comprises a membrane and a gasket, which gasket comprises an annular field gasket portion enclosing at least part of the membrane, and at least six annular ring gasket portions. The membrane gasket arrangement is arranged between the two heat transfer plates. The field gasket portion of the membrane gasket arrangement is accommodated in the field groove portion of the heat transfer plates. The ring gasket portions of the membrane gasket arrangement are accommodated in a respective one of the ring groove portions of the heat transfer plates. The assembly further comprises an insulating layer extending at least on an outside of the field gasket portion and the ring gasket portions of the membrane gasket arrangement to electrically insulate the heat transfer plates from each other. The assembly is characterized in that each of the heat transfer plates has a plurality of holes in an edge portion arranged outside the membrane gasket arrangement groove. The assembly further comprises a plurality of insulating pins. Each of the pins extends through a respective one of said holes of at least one of the two heat transfer plates to fix the heat transfer plates and the membrane gasket arrangement in relation to each other.

The heat transfer plates may have similar or different designs.

It should be stressed that "annular" not necessarily is circular but may be any "closed" shape, such as oval, polygonal and any combination thereof. Similarly, "ring" does not necessarily mean circular but may mean any "closed" shape, such as oval, polygonal and any combination thereof.

The field groove portion may, or may not, be separated from one or more of the ring groove portions. Consequently, the field gasket portion may, or may not, be separated from one or more of the ring gasket portions.

By insulating is here meant electrically non-conductive.

The heat transfer plates may be essentially rectangular. The holes may be distributed along two opposite longitudinal, and/or two opposite transverse, outer edges of the heat transfer plates.

Each of the pins may extend through a respective one of said holes of only one of the two heat transfer plates. Alternatively, one or more of the pins may extend through a respective one of said holes of both the heat transfer plates.

In that the pins fix the heat transfer plates and the membrane gasket arrangement in relation to each other, with the membrane gasket arrangement positioned in between the heat transfer plates, a cassette is formed which makes sure that the heat transfer plates and the membrane gasket arrangement are properly positioned, and maintained properly positioned, in relation to each other. Thereby, the handling of the heat transfer plates and the membrane gasket arrangement, for example in connection with installation of the heat transfer plates and the membrane gasket arrangement in an apparatus for a heat generating process, is facilitated. Also, by sandwiching the membrane gasket arrangement between the heat transfer plates in a cassette, the membrane of the membrane gasket arrangement is protected, for example, from becoming dry and thereby impaired.

In that the pins are insulating, they do not provide unwanted electrical contact between the heat transfer plates.

The insulating layer of the assembly may have any suitable configuration, for example, the insulating layer may be provided in the form of an insulating coating on one or both of the heat transfer plates. As another example, the insulating layer may be a separate insulating sheet arranged to be positioned on an outside of the field gasket portion and the ring gasket portions of the membrane gasket arrangement and between the heat transfer plates. Alternatively, the insulating layer may comprise a sheet, for example a rubber sheet, forming part of the membrane gasket arrangement, i.e. being connected to the other components of the membrane gasket arrangement. Such an embodiment may ensure a correct positioning of the insulating layer in the cassette and may facilitate handling of the insulating layer. The sheet could be integrally formed with other components of the membrane gasket arrangement, such as the gasket thereof.

The pins of the assembly could have any suitable configuration. For example, at least a some of the pins could at least partly form part of the membrane gasket arrangement, i.e. be at least partly connected to the other components of the membrane gasket arrangement. Such an embodiment may reduce the number of separate components of the assembly and facilitate the handling of the pins and the building of the cassette. If each of the pins comprises more than one component which are separable, such as a shaft and a head, one of the components, typically the shaft, could form part of the membrane gasket arrangement while the head could be separate. In such an embodiment, the pin would at least partly form part of the membrane gasket arrangement. On the other hand, if each of the pins comprises one single component, i.e. not separable components, the complete pin could form part of the membrane gasket arrangement.

The assembly could be so configured that at least some of the pins are connected to, possibly integrally formed with, the insulating layer, whether this forms part of the membrane gasket arrangement or not. Such an embodiment may reduce the number of separate components of the assembly and facilitate the handling of the pins and the building of the cassette.

The assembly could be so configured that at least some of the pins are separate from the membrane gasket arrangement. Such an embodiment may enable easy replacement of at least some of the pins, should this be necessary och suitable.

The assembly may be such that at least some of the pins project from the insulating layer in one direction and at least some of the pins project from the insulating layer in another opposite direction. The pins projecting in said one direction may engage with one of the heat transfer plates and the pins projecting in said another opposite direction may engage with the other one of the heat transfer plates so as to form the cassette.

Alternatively/additionally, the assembly may be such that at least some of the pins project from the insulating layer in both said one direction and said another opposite direction. Pins projecting in both directions may engage with both the heat transfer plates so as to form the cassette.

The pins may be arranged to engage with the heat transfer plates in any suitable way. Consequently, they may have any suitable design. For example, for at least some of the pins, a portion of the pin may have an outer dimension perpendicular to a longitudinal extension of the pin that exceeds an inner dimension of said respective one of said holes of at least one of the two heat transfer plates where the pin engages with said at least one of the two heat transfer plates. This portion of the pin may be arranged on an opposite side of said at least one of the two heat transfer plates than the insulating layer and hinder the pin from being disengaged from said at least one of the two heat transfer plates such that an interlock between the pin and said at least one of the two heat transfer plates is achieved.

As mentioned above, one or more of the pins may each comprise one single component which, on its own, functions to fix at least one of the heat transfer plates and the membrane gasket arrangement in relation to each other. Alternatively/additionally, one or more of the pins may each comprise two or more separable components which interact to fix at least one of the heat transfer plates and the membrane gasket arrangement in relation to each other.

The pin portion referred to above may be integrally formed with the rest of the pin so as to form a pin comprising one single component which, on its own, functions to fix at least one of the heat transfer plates and the membrane gasket arrangement in relation to each other. Such a pin portion may have to be deformed and forced through said respective one of said holes of at least one of the two heat transfer plates before it spontaneously springs back to its undeformed state and thereby locks with said at least one of the two heat transfer plates.

Alternatively, the pin portion referred to above may be separate from the rest of the pin so as to form a pin comprising multiple components, i.e. more than one component, which cooperates to fix at least one of the heat transfer plates and the membrane gasket arrangement in relation to each other. The components may cooperate in any suitable way, such as by a screw or a snap connection. The components may repeatedly separable and connectable so as to provide a cassette that may be assembled and disassembled in a non-destructive way.

The assembly may be so designed that the edge portion of each of the heat transfer plates is corrugated and comprises alternately arranged ridges and valleys, the ridges of the one of the heat transfer plates facing the ridges of the other one of the heat transfer plates. Further, the holes in the edge portions of the heat transfer plates may extend through the ridges. In that the edge portions of the heat transfer plates are corrugated, the rigidity of the heat transfer plates is improved. Typically, the ridges of one of the heat transfer plates are arranged to abut, indirectly because of the provision of the insulating layer, respective ones of the ridges of the other one of the heat transfer plates. When the holes extend through the ridges of the edge portions of the heat transfer plates, they extend at positions where a distance between the heat transfer plates is the smallest which enables use of shorter pins and a relatively stable fixing of the heat transfer plates and the membrane gasket arrangement in relation to each other.

The assembly may further comprise two electrode devices. One of the electrode devices may be arranged between one of the heat transfer plates and the membrane gasket arrangement and the other one of the electrode devices may be arranged between the other one of the heat transfer plates and the membrane gasket arrangement. The portholes within the first end portion of the heat transfer plates may be arranged on one side only of an imaginary first straight line extending perpendicular to said longitudinal center axis, while the electrode devices are arranged on another side only of said imaginary first straight line. The portholes within the second end portion of the heat transfer plates may be arranged on one side only of an imaginary second straight line extending perpendicular to said longitudinal center axis, while the electrode devices are arranged on another side only of said imaginary second straight line. This embodiment means that there are two electrode devices arranged on opposite sides of the membrane gasket arrangement. As previously discussed, the assembly according to the invention is typically used in an apparatus for production of hydrogen. By incorporating electrode devices in the assembly, an apparatus may be achieved that has a small and even distance between electrodes, which may result in an increased production of hydrogen and increased robustness as regards sealing and manufacturing.

The electrode devices may have any suitable shape, such as a rectangular shape or an essentially rectangular shape with a pair of opposing sides bulging away from each other. The design of the electrode devices is typically adapted to the design of the heat transfer plates. The electrode devices may be formed as plates.

As expressed differently above, the electrode devices extend between the imaginary first and second straight lines, i.e. between the portholes within the first end portion, and the portholes within the second end portion, of the heat transfer plates. Thus, the electrode devices are smaller than the heat transfer plates in that at least an extension of the heat transfer plates along the longitudinal center axis of the heat transfer plates exceeds an extension of the electrode devices along the longitudinal center axis of the heat transfer plates. Since the electrode devices extend within the portholes of the heat transfer plates, they don't have to comprise portholes for feeding fluids past the electrode devices. Smaller electrode devices without portholes enable relatively robust and mechanically straight-forward sealing solutions in the apparatus comprising the assembly.

The assembly may have such a configuration that the field gasket portion of the membrane gasket arrangement extends on an outside of the electrode devices. This means that the electrode devices are enclosed or encircled by the field groove portion of the membrane gasket arrangement grooves of the heat transfer plates. Thereby, the electrode devices may be sealed off inside the cassette.

The assembly may further comprise a membrane gasket, which may be arranged to engage with the membrane of the membrane gasket arrangement. Further, each of the electrode devices may comprise an electrode gasket groove accommodating the membrane gasket. Thus, the electrode gasket grooves of the electrode devices may face each other. By this embodiment, parts of the electrode devices extending on an inside of the electrode gasket grooves may be sealed off.

As said above, the pins of the assembly could have any suitable configuration. As an example, a free end of at least a plurality of the pins may be tapered in a direction away from the insulating layer. Thereby, insertion of the pins through the holes in the edge portions of the heat transfer plates may be facilitated.

Still other objectives, features, aspects and advantages of the invention will appear from the following detailed description as well as from the drawings.

### Brief Description of the Drawings

The invention will now be described in more detail with reference to the appended schematic drawings, in which
Figs. 1a and 1b are essentially similar perspective views schematically illustrating a part of an apparatus, which comprises assemblies according to the invention, in a disassembled state, and different fluid paths through the apparatus,
Fig. 2 is a schematic plan view of a front side of a sub-assembly of the apparatus in Fig. 1a,
Fig. 3 is a schematic plan view of a front side of a heat transfer plate of the sub-assembly in Fig. 2,
Fig. 4 is a schematic partial side view of the heat transfer plate in Fig. 3,
Fig. 5 is a schematic plan view of a part of the heat transfer plate in Fig. 3,
Fig. 6 is an enlargement of a portion of the heat transfer plate in Fig. 3,
Fig. 7a is a cross section, along a line A-A illustrated in Fig. 6, of a portion of the sub-assembly in Fig. 2, Fig. 7a consisting of two sub figures of which the lower one is an enlargement of part of the upper one,
Fig. 7b is another cross section, along a line B-B illustrated in Fig. 6, of the portion in Fig. 7a,
Fig. 8 is a schematic plan view of a part of the sub-assembly in Fig. 2,
Fig. 9. is a schematic plan view of a membrane gasket arrangement of the apparatus in Fig. 1a,
Fig. 10 is a schematic side view of the membrane gasket in Fig. 9, and
Fig. 11 is a schematic perspective view of a part of one of the assemblies of the apparatus in Fig. 1a.

### Detailed Description

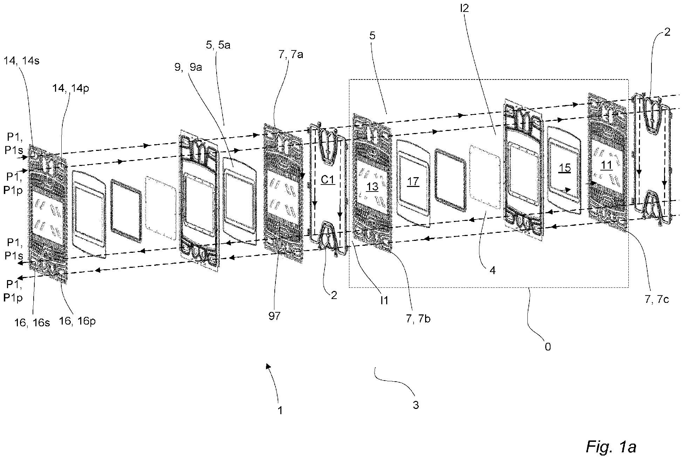

Fig. 1a illustrates a part of an apparatus 1 used for producing hydrogen through electrolysis, here alkaline water electrolysis. The apparatus 1 comprises a stack 3 (only partly illustrated) of essentially similar sub-assemblies 5 which each comprises a heat transfer plate 7 and an electrode device 9 in the form of a plate. The heat transfer plates 7 each has a front side 11 and an opposing back side 13. The electrode devices 9 each has a front side 15 and a back side 17. In the sub-assemblies 5, the front side 11 of the heat transfer plate 7 abuts the back side 17 of the electrode device 9. To enable the electrolysis, a current is applied to the apparatus 1 to turn the sub-assemblies into electrodes, more particularly every second one of the sub-assemblies 5 into anodes and the rest of the sub-assemblies 5 into cathodes.

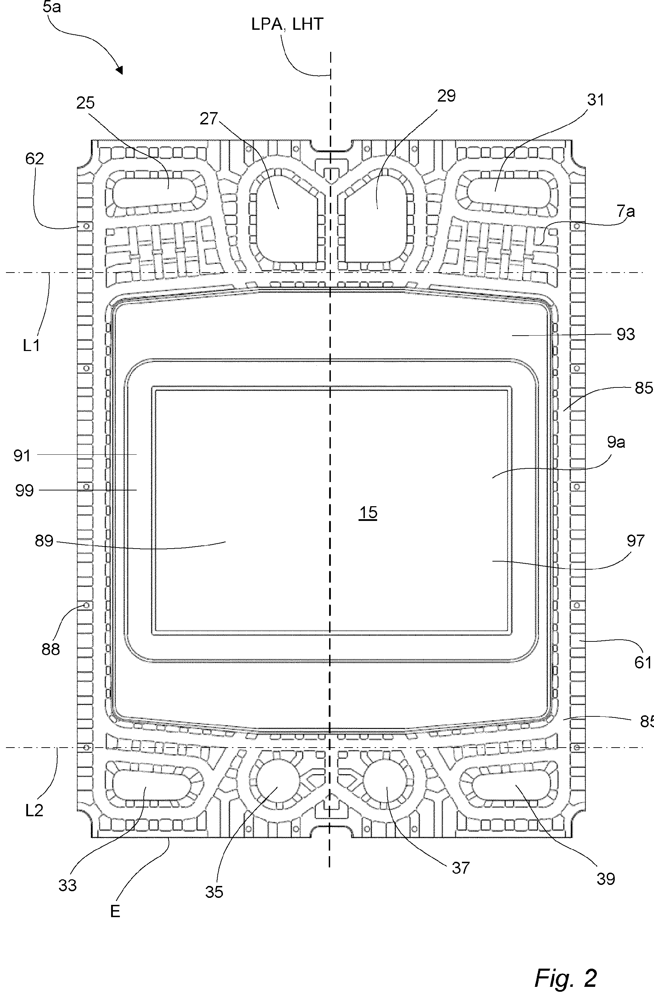

In the stack 3, the sub-assemblies 5 are "turned" in relation to each other, i.e. arranged electrode device front side 15 to electrode device front side 15 and heat transfer plate back side 13 to heat transfer plate back side 13. This is achieved by rotating every second one of the sub-assemblies 5 180 degrees around a respective sub-assembly longitudinal center axis LPA (Fig. 2) with respect to the rest of the sub-assemblies 5.

One of the sub-assemblies 5, denoted 5a, the heat transfer plate of the sub-assembly 5a, denoted 7a, and the electrode device of the sub-assembly 5a, denoted 9a, are illustrated in further detail in Figs. 2 to 8.

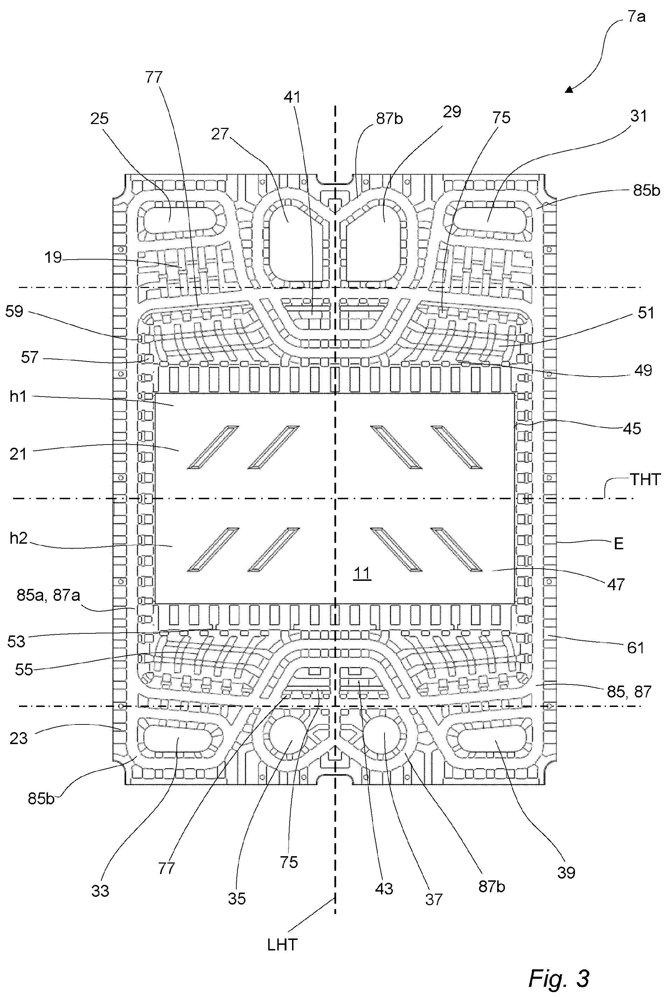

With reference to Fig. 3, the heat transfer plate 7a is formed of a sheet of stainless steel (could be other materials in other embodiments) of thickness t1 and has a first end portion 19, an intermediate portion 21 and a second end portion 23 arranged in succession along a longitudinal center axis LHT of the heat transfer plate 7a. In the sub-assembly 5a, the longitudinal center axis LHT of the heat transfer plate 7a is aligned with the longitudinal center axis LPA (Fig. 2) of the sub-assembly 5a. The borders between the first end portion 19, the intermediate portion 21 and the second end portion 23 are illustrated with ghost lines in Fig. 3. The first end portion 19 comprises a first porthole 25, a third porthole 27, a fifth porthole 29 and a seventh porthole 31, while the second end portion 23 comprises a second porthole 33, a fourth porthole 35, a sixth porthole 37 and an eighth porthole 39. The first, second, third and fourth portholes 25, 33, 27 and 35 are mirrorings, across the longitudinal center axis LHT of the heat transfer plate 7a, of the seventh, eighth, fifth and sixth portholes 31, 39, 29 and 37, respectively. Further, a first transfer hole 41 is arranged within a first half h1 of the heat transfer plate 7a, and a second transfer hole 43 is arranged within a second half h2 of the heat transfer plate 7a, which first half h1 and second half h2 are arranged on opposite sides of a transverse center axis THT and comprise the first end portion 19 and the second end portion 23, respectively, of the heat transfer plate 7a. As is clear from Fig. 3, the first and second transfer holes 41 and 43 are arranged within the intermediate portion 21 of the heat transfer plate 7a, on opposite sides of the longitudinal center axis LHT of the heat transfer plate 7a.

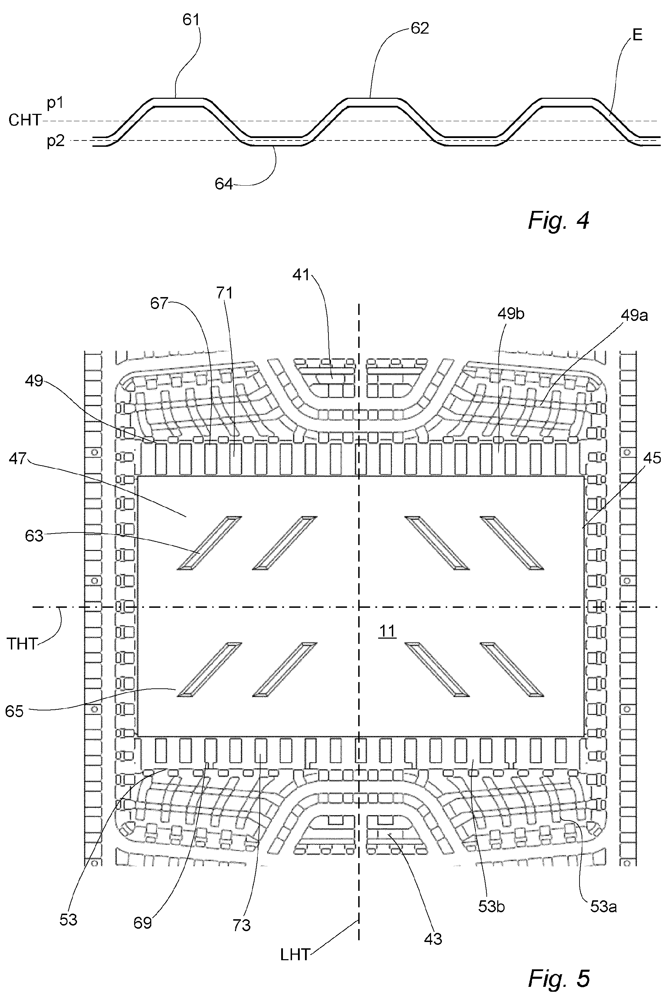

As heat transfer plates normally are, the heat transfer plate 7a is pressed with corrugation patterns of ridges and valleys in relation to a respective central extension plane CHT of the heat transfer plate 7a, which central extension plane is parallel to the figure plane of Fig. 3 and illustrated in Fig. 4. The corrugation patterns within different areas of the heat transfer plate 7a are different. More particularly, the intermediate portion 21 comprises a heat transfer area 45 which is pressed with a heat transfer corrugation pattern 47 (only schematically illustrated in Fig. 3), a first distribution area 49 which is pressed with a first distribution pattern 51 and a second distribution area 53 which is pressed with a second distribution pattern 55. The first distribution area 49 extends between the first end portion 19 and the heat transfer area 45 while the second distribution area 53 extends between the second end portion 23 and the heat transfer area 45. The intermediate portion 21 further comprises an annular first support area 57 and an annular second support area 59. The first support area 57 encircles the heat transfer area 45, the first distribution area 49 and the second distribution area 53. The second support area 59 encircles the first support area 57. An outer edge portion 61 of the heat transfer plate 7a is pressed with alternately arranged ridges 62 and valleys 64 extending from an outer edge E of the heat transfer plate 7a. As is illustrated in Fig. 4, the ridges 62 and valleys 64 of the outer edge portion 61 extends in and between parallel first and second extreme planes p1 and p2 extending parallel to the central extension plane CHT. Corrugations are also provided around the first and second transfer holes 41 and 43, as is illustrated for example in Fig. 3.

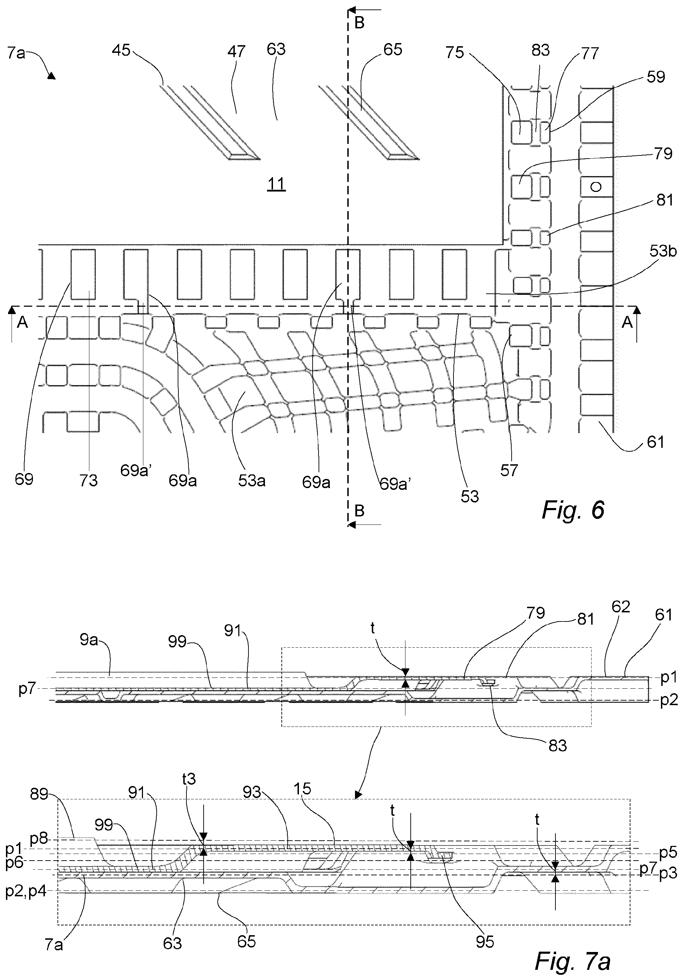

With reference to Figs. 5, 6, 7a and 7b, the heat transfer corrugation pattern 47 is of so-called herringbone type. As seen from the front side 11 of the heat transfer plate 7a, the heat transfer corrugation pattern 47 comprises alternately arranged elongate ridges 63 and valleys 65 which are inclined in relation to the longitudinal center axis LHT of the heat transfer plate 7a. The ridges 63 and the valleys 65 extend in and between parallel third and fourth extreme planes p3 and p4 (Fig. 7a). The fourth extreme plane p4 coincides with the second extreme plane p2 and the third extreme plane p3 extends between the first and fourth extreme planes p1, p4. Thus, since the third extreme plane p3 is arranged below the first extreme plane p1, the heat transfer area 45 is, at the front side 11 of the heat transfer plate 7a, "recessed" in relation to the ridges 62 of the outer edge portion 61 of the heat transfer plate 7a.

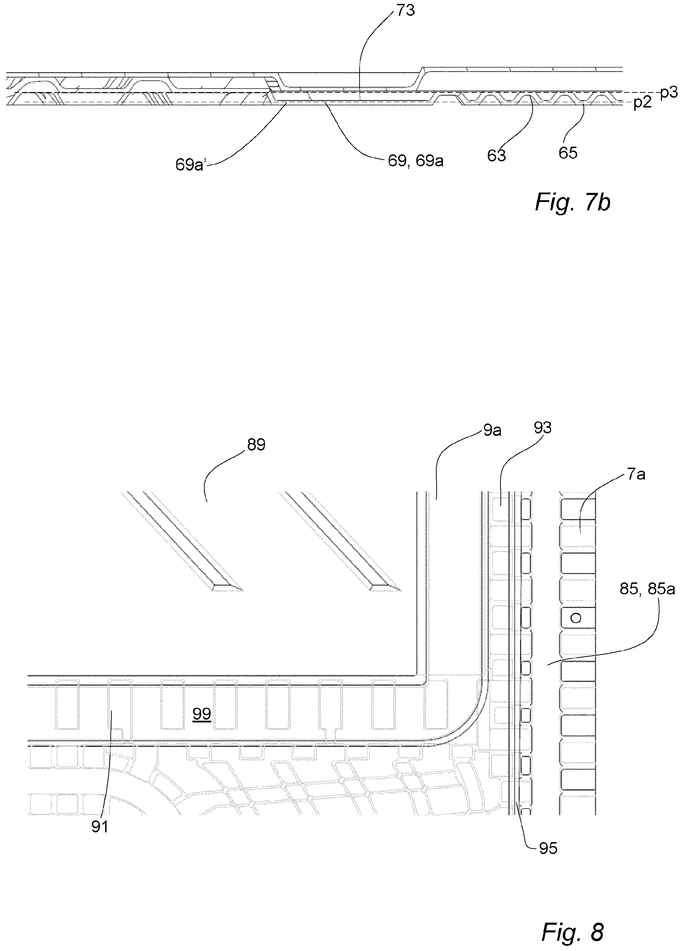

With special reference to Fig. 5, the first distribution area 49 comprises a first primary distribution sub area 49a and a first secondary distribution sub area 49b, which first secondary distribution sub area 49b extends between the first primary distribution sub area 49a and the heat transfer area 45. Similarly, the second distribution area 53 comprises a second primary distribution sub area 53a and a second secondary distribution sub area 53b, which second secondary distribution sub area 53b extends between the second primary distribution sub area 53a and the heat transfer area 45. The first and second primary distribution sub areas 49a and 53a are each provided with a pattern of so-called chocolate type. With reference also to Figs. 6, 7a and 7b, which illustrate part of the second distribution area 53, the first and second secondary distribution sub areas 49b and 53b comprises a plurality of distribution recesses 67 (Fig. 5) and 69 (Fig. 6) which are equidistantly distributed along the transverse center axis THT (Fig. 3) of the heat transfer plate 7a. A respective bottom 71 (Fig. 5) and 73 (Fig. 6) of these distribution recesses 67 and 69 extend in the second extreme plane p2 (Fig. 7b). Outside the distribution recesses 67 and 69, within the first and second secondary distribution sub areas 49b and 53b, the heat transfer plate 7a extends in the third extreme plane p3. A few of the distribution recesses in the second secondary distribution sub area 53b, the ones denoted 69a (Fig. 6), comprise a respective channel 69a' which extends towards the second primary distribution sub area 53a. The distribution recesses 67 in the first secondary distribution sub area 49b all lack corresponding channels. The function of the distribution recesses 67 and 69 and the channels 69a' of the distribution recesses 69a will be discussed below.

With reference again to Figs. 3, 6 and 7a, the first support area 57 comprises separately arranged first support ridges 75 while the second support area 59 comprises separately arranged second support ridges 77. Most of the first support ridges 75 is aligned with a respective one of the second support ridges 77. However, as can be seen in Fig. 3, at outer transverse sides of the first and second distribution areas 49, 53 (sides extending along the transverse center axis THT and closest to the portholes), some of the first support ridges 75 are elongated and extend along more than one of the second support ridges 77, and some of the second support ridges 77 are elongated and extend along more than one of the first support ridges 75. Each of the first support ridges 75 comprises a top 79 (Fig. 6) which extends in a fifth extreme plane p5 (Fig. 7a) which is arranged slightly below, on a distance t, from the first extreme plane p1, i.e. between the first and third extreme planes p1 and p3. Each of the second support ridges 77 comprises a top 81 (Fig. 6) which extends in the first extreme plane p1. Between the tops 79 and 81 of the first and second support ridges 75 and 77, the heat transfer plate 7a comprises a recess 83 (Fig. 6) which discontinuous, annular and extends between the first and second support areas 57 and 59. As is clear from Fig. 7a, a bottom of the recess 83 extends in a sixth extreme plane p6 which is arranged slightly below the fifth extreme plane p5, i.e. between the fifth and third extreme planes p5 and p3.

With reference again to Fig. 3, the heat transfer plate 7a further comprises, on its front side 11, a membrane gasket arrangement groove 85 extending on an inside of the edge portion 61. The membrane gasket arrangement groove 85 includes an annular field groove portion 85a enclosing the heat transfer area 45, the first and second distribution areas 49 and 53, the first and second support areas 57 and 59 and the first and second transfer holes 41 and 43. The membrane gasket arrangement groove 85 further includes ring groove portions 85b which are arranged outside the field groove portion 85a and each encloses a respective one of the first to eighth portholes 25, 33, 27, 35, 29, 37, 31 and 39.

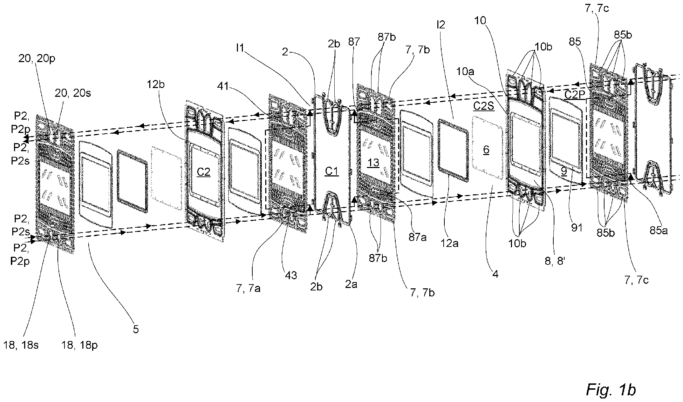

With reference to Fig. 1b, the heat transfer plate 7a further comprises, on its back side 13, a HT back gasket groove 87, which partly is aligned with the membrane gasket arrangement groove 85. In Fig. 3, a back of the HT back gasket groove 87 is visible. The HT back gasket groove 87 includes an annular field portion 87a enclosing (Fig. 3) the heat transfer area 45, part of the first and second distribution areas 49 and 53, the first and second support areas 57 and 59 and the first, second, seventh and eights port holes 25, 33, 31 and 39. The HT back gasket groove 87 further includes ring portions 87b (Fig. 3) which are arranged outside the field portion 87a and each encloses a respective one of the third, fourth, fifth and sixth portholes 27, 35, 29 and 37. Further, one of the ring portions 87b of the HT back gasket groove 87 also encloses the first transfer hole 41 while another one of the ring portions 87b of the HT back gasket groove 87 also encloses the second transfer hole 43.

Here (but not necessarily in alternative embodiments of the invention), a bottom of the membrane gasket arrangement groove 85, just like a bottom of the HT back gasket groove 87, extend halfway between the first and second extreme planes p1 and p2, i.e. in the central extension plane CHT (Fig. 4).

With reference again to Fig. 2, the heat transfer plate 7a further comprises a plurality of holes 88 in the edge portion 61 thereof, which holes 88 are distributed along the outer edge E so as to be located along short sides as well as long sides of the heat transfer plate 7a. The holes 88 extend through a respective one of the ridges 62 of the edge portion 61 of the heat transfer plate 7a.

With reference to Figs. 2 and 7a, the electrode device 9a is formed of a sheet of stainless steel (could be other materials in other embodiments) of thickness t2 which here equals t1, i.e. t1=t2=t, and comprises a center portion 89, an electrode device gasket groove 91 on its front side 15 and an outer portion 93. The center portion 89, the electrode device gasket groove 91 and the outer portion 93 are integrally formed. The electrode device gasket groove 91 is annular and encloses the center portion 89. The outer portion 93 is annular and encloses the electrode device gasket groove 91. The center portion 89 is non-solid, here perforated (perforation not illustrated in the figures), while the complete electrode device gasket groove 91 and the complete outer portion 93 are solid. As seen in Fig. 7a, a peripheral annular outer edge 95 of the outer portion 93 of the electrode device 9a is bent towards the heat transfer plate 7a so as to form a "rim" with a "brim" extending all the way around the electrode device 9a.

With reference to Fig. 1a and 2, as expressed above, in the sub-assembly 5a, the front side 11 of the heat transfer plate 7a abuts the back side 17 of the electrode device 9a. Arranged like this, the electrode device 9a covers an engagement portion 97 of the heat transfer plate 7a. The shape and size of the engagement portion 97 of the heat transfer plate 7a is defined by a periphery of the "brim" of the electrode device 9a. The engagement portion 97 is arranged between imaginary first and second straight lines L1 and L2 (Fig. 2) which extend perpendicular to the longitudinal center axis LHT of the heat transfer plate 7a. The first, third, fifth and seventh portholes 25, 27, 29 and 31 are arranged on one side, while the engagement portion 97 is arranged on the other side, of the imaginary first straight line L1. Similarly, the second, fourth, sixth and eighth portholes 33, 35, 37 and 39 are arranged on one side, while the engagement portion 97 is arranged on the other side, of the imaginary second straight line L2.

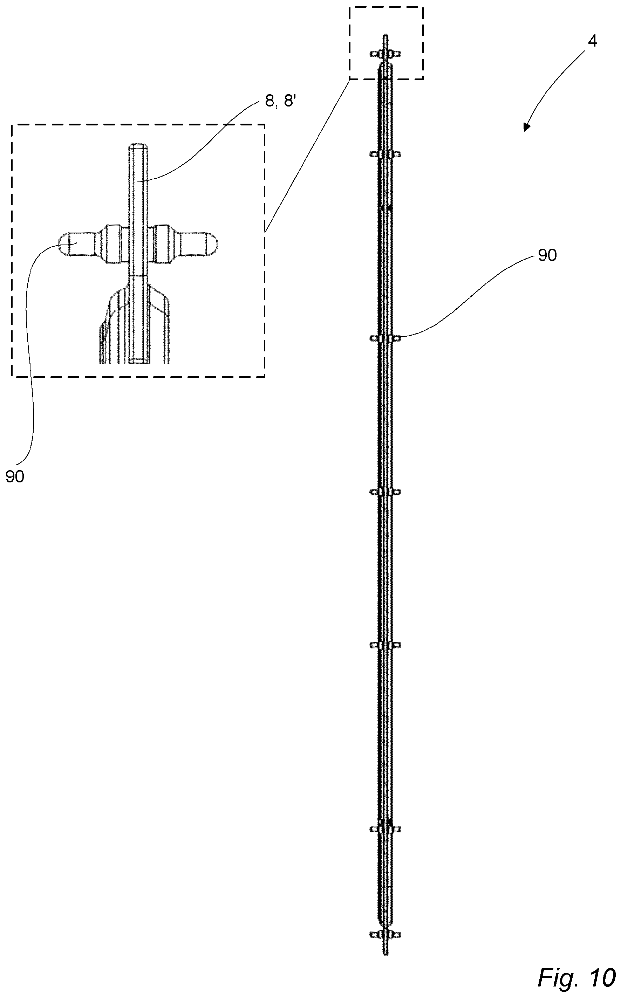

With reference to Figs. 2, 4, 6, 7a, 7b and 8 (which illustrates the electrode device 9a as see-through), when the electrode device 9a engages properly with the heat transfer plate 7a, the recess 83 of the heat transfer plate 7a receives the outer edge 95 of the electrode device 9a (Fig. 7a), and the field groove portion 85a of the membrane gasket arrangement groove 85 of the heat transfer plate 7a encircles the electrode device 9a (Fig. 2). Further, the tops 79 of the first support ridges 75 of the first support area 57 of the heat transfer plate 7a (Fig. 6) contact the outer portion 93 of the electrode device 9a on an inside of the outer edge 95 thereof (Fig. 7a). As illustrated in Fig. 2 in combination with Fig. 3 and Fig. 8, the solid outer portion 93 of the electrode device 9a covers the first and second primary distribution sub areas 49a and 53a and the first and second transfer holes 41 and 43 of the heat transfer plate 7a. The electrode device gasket groove 91 covers most of the first and second secondary distribution sub areas 49b and 53b and part of the heat transfer area 45, while the perforated center portion 89 covers the rest of the heat transfer area 45. As is clear from Fig. 7a, the outer portion 93 of the electrode device 9a has a thickness t on the inside of the outer edge 95. Since the tops 79 of the heat transfer plate 7a supporting the outer portion 93 of the electrode device 9a extend a distance t below tops of the ridges of the outer edge portion 61 of the heat transfer plate 7a, the front side 15 of the electrode device 9a will, within the outer portion 93 on the inside of the outer edge 95, extend flush with the tops of the ridges of the outer edge portion 61 of the heat transfer plate 7a, i.e. extend in the first extreme plane p1. Further, a bottom 99 of the electrode device gasket groove 91 extends in a seventh extreme plane p7 extending a distance t above the third extreme plane p3 (Fig. 7a). The electrode device 9a has a thickness t within the bottom 99 of the electrode device gasket groove 91. Therefore, the bottom 99 of the electrode device gasket groove 91 will abut the heat transfer plate 7a within the first and second secondary distribution sub areas 49b and 53b, outside the distribution recesses 67 and 69 (Figs. 4 and 8). Within the center portion 89, the electrode device 9a extends in an eighth extreme plane p8 which extends a distance t3 above the first extreme plane p1 (Fig. 7a). Thus, the fifth and eighth extreme planes p5 and p8 extend on opposite sides of the first extreme plane p1. In that the center portion 89 of the electrode device 9a projects beyond the first extreme plane p1, it may compensate for a space occupied by a rubber sheet 8' of a membrane gasket arrangement 4 (Figs. 1b and 9-10) to be described below, which rubber sheet extends outside the center portion 89 in the apparatus 1 comprising the electrode device 9a and the membrane gasket arrangement.

As is clear from the figures, the heat transfer plate 7a and the electrode device 9a are designed to match each other. As illustrated in Fig. 3, the field groove portion 85a of the membrane gasket arrangement groove 85 of the heat transfer plate 7a has straight longitudinal sides extending parallel to the longitudinal center axis LHT of the heat transfer plate, and, as seen from a center of the heat transfer plate 7a, outwards bulging transverse sides connecting the longitudinal sides. Thus, also the first and second support areas 57, 59 of the heat transfer plate 7a have opposing straight longitudinal portions and opposing curved transverse portions. Further, as illustrated in Fig. 2, the electrode device 9a has opposing straight longitudinal outer edge portions and opposing curved transverse outer edge portions.

The above description of the sub-assembly 5a, the heat transfer plate 7a and the electrode device 9a is applicable also to the other sub-assemblies 5, heat transfer plates 7 and electrode devices 9 of the apparatus 1.

With reference again to Fig. 1a, in the apparatus 1, the stack 3 of sub-assemblies 5 is arranged between two frame plates (not illustrated). Of course, the apparatus 1 may comprise one or more additional heat transfer plates which are not part of a sub-assembly, for example adjacent the frame plates. The heat transfer plates 7 of the sub-assemblies 5 can be seen as arranged in pairs, wherein heat transfer plates 7a and 7b form one of these pairs, while heat transfer plate 7c forms one of the heat transfer plates of another adjacent one of these pairs. The heat transfer plates of each pair form between them a first interspace I1. Further, a second interspace I2 is formed between each two adjacent pairs of heat transfer plates 7.

With reference also to Fig. 1b, a rubber back gasket 2 is arranged within each of the first interspaces I1 to define a first flow channel C1 therein. The back gasket 2, which will not be described in detail herein, comprises an annular field portion 2a and ring portions 2b arranged in the annular field portion 87a and the ring portions 87b, respectively, of the HT back gasket groove 87 of the heat transfer plates 7.

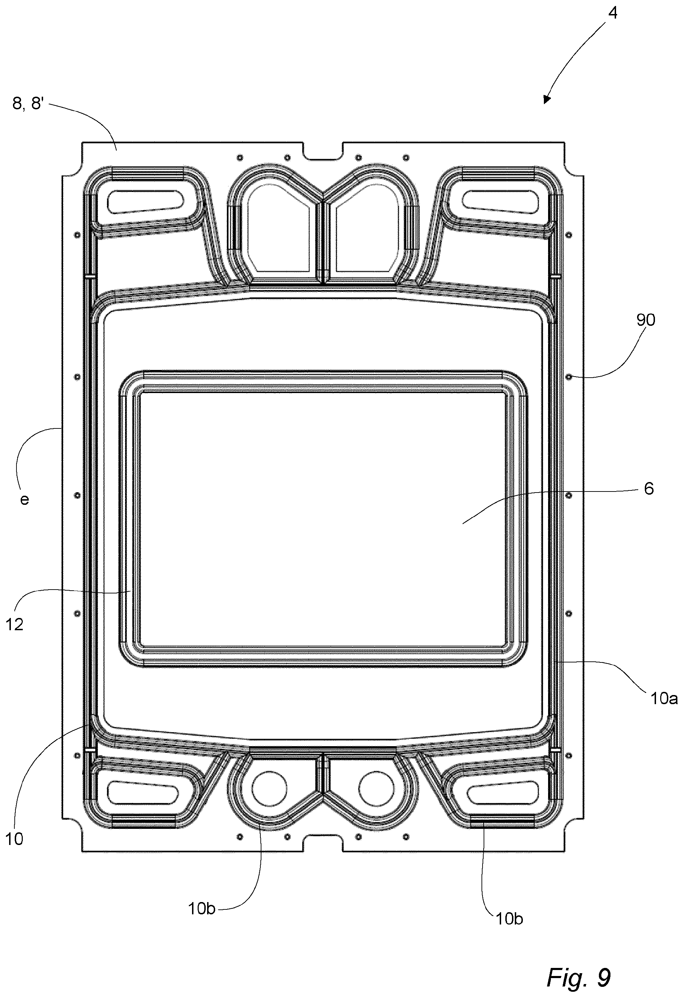

A membrane gasket arrangement 4 is arranged within each of the second interspaces I2 to define a second flow channel C2 therein. The membrane gasket arrangement 4, which is illustrated in more detail in Fig. 9, comprises a hydroxide ion permeable membrane 6, an insulating layer 8 in the form of a rubber sheet 8' of thickness t3 with openings for passage of fluids and for exposure of the membrane 6, a rubber gasket 10 and a rubber membrane gasket 12. The gasket 10 comprises an annular field gasket portion 10a enclosing the membrane 6 and eight annular ring gasket portions 10b arranged on an outside of the field gasket portion 10a. With reference to Fig. 1b, the field gasket portion 10a and the ring gasket portions 10b are arranged in the field groove portion 85a and the ring groove portions 85b, respectively, of the membrane gasket arrangement groove 85 of the heat transfer plates 7. The membrane gasket 12 is annular and comprises first and second portions 12a and 12b. The first portion 12a of the membrane gasket 12a is separate while the other portion 12b of the membrane gasket 12 is bounded with the rubber sheet 8'. The first and second portions 12a and 12b of the membrane gasket 12 are arranged in the electrode device gasket groove 91 of the adjacent electrode devices 9 and configured to engage with each other, for example by pins or glue, to fix the membrane 6 to the rubber sheet 8'. The rubber sheet 8' extends between the membrane gasket 12 and the field gasket portion 10a of the gasket 10, and on an outside of the field gasket portion 10a of the gasket 10 around the openings for the first to eighth portholes 25, 33, 27, 35, 29, 37, 31 and 39. With reference to Figs. 9-11, the membrane gasket arrangement 4 further comprises a plurality of insulating rubber pins 90 which each projects in opposite directions from the rubber sheet 8' close to an outer peripheral edge e thereof. The pins 90 are integrally formed with the rubber sheet 8 and distributed along short sides and long sides thereof. With reference to Figs. 1b, 2, 9 and 11, each of the pins 90 extends through a respective pair of aligned holes 88 of the adjacent heat transfer plates 7. The pins 90 aligns and connects the membrane gasket arrangement 4 and the adjacent heat transfer plates 7 so as to form a cassette of them.

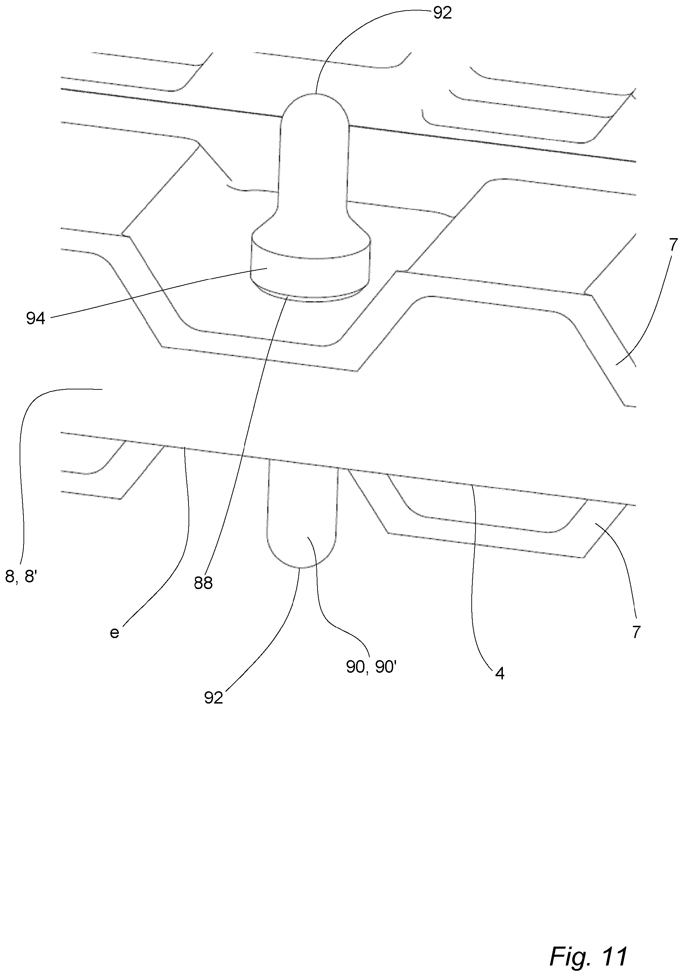

The pins 90 all have essentially the same design. The engagement between one of the pins 90, denoted 90', and the two adjacent heat transfer plates 7 is illustrated in more detail in Fig. 11. The pin 90' has a circular cross section with a diameter that varies along a longitudinal extension of the pin 90'. Further, the pin 90' has two free ends 92 which are tapered in a direction away from the rubber sheet 8' so as to facilitate insertion of the pin 90' into the corresponding holes 88 of the adjacent heat transfer plates 7. An intermediate portion 94 of the pin 90' on each side of the rubber sheet 8' (only one visible in Fig. 11) has a diameter which exceeds the diameter of the rest of the pin 90', and also a diameter of the holes 88 of the heat transfer plates 7. Thus, when the pin 90' is inserted into the holes 88, the intermediate portions 94 are forced through the holes 88 which necessitates a deformation of the intermediate portions 94. When the intermediate portions 94 have passed through the holes 88, they return to their undeformed shape and, thereby, lock the membrane gasket arrangement 4 to the heat transfer plates 7.

With reference again to Fig. 1b, the membrane gasket arrangement 4 splits the corresponding second flow channel C2 in a second primary sub channel C2P and a second secondary sub channel C2S, which sub channels are parallel and extend on opposite sides of the membrane gasket arrangement 4.

With reference to Fig. 1a and the rectangle in dashed lines, each two adjacent ones of the sub-assemblies 5 (i.e. pairs of a heat transfer plate 7 and an electrode device 9), defining one of the second interspaces I2 form, together with the intermediate one of the membrane gasket arrangements 4, an assembly 0.

When the apparatus 1 is ready for use, the sub-assemblies 5 and the interposed back gaskets 2 and membrane gasket arrangements 4 are compressed, by some kind of tightening means, between the frame plates so as to tightly form the first and second flow channels C1 and C2 and also ports for conveying first and second fluids through the apparatus 1. Compressed like that, the heat transfer plates 7 of each of the pairs, such as the heat transfer plates 7a and 7b, abut each other in contact areas, while contact between adjacent pairs of heat transfer plates 7, such as the heat transfer plates 7b and 7c, is prevented by the presence of the membrane gasket arrangements 4 between the plate pairs. This separation or insulation between the plate pairs is necessary for the apparatus 1 to work properly for electrolysis. Typically, the membrane gasket arrangements 4 are fragile. In that the outer edge 95 (Fig. 7a) of the electrode devices 9, which outer edge 95 may be sharp, is bent away from the respective adjacent membrane gasket arrangement 4, the rubber sheet 8' thereof is less likely to be damaged by the electrode device 9.

With continued reference to Figs. 1a and 1b, the ports comprise first inlet port means 14 and first outlet port means 16 for the first fluid and second inlet port means 18 and second outlet port means 20 for the second fluid. In turn, the first inlet port means 14 comprises a first primary inlet port 14p and a first secondary inlet port 14s, the first outlet port means 16 comprises a first primary outlet port 16p and a first secondary outlet port 16s, the second inlet port means 18 comprises the second primary inlet port 18p and the second secondary inlet port 18s, and the second outlet port means 20 comprises the second primary outlet port 20p and the second secondary outlet port 20s. Here, the first fluid is a cooling fluid, for example deionized water, and the second fluid is an electrolyte, for example a mixture of water and an alkaline agent, such as potassium hydroxide.

With reference to Fig. 1a and the dashed lines, a first fluid path P1 for conveying the first fluid through the apparatus 1 comprises a first primary fluid path P1p and a first secondary fluid path P1s. The first primary fluid path P1p extends through the first primary inlet port 14p, through the first flow channels C1 and into the first primary outlet port 16p. The first secondary fluid path P1s extends through the first secondary inlet port 14s, through the first flow channels C1 and into the first secondary outlet port 16s.

With reference to Fig. 1b and the dashed lines, a second fluid path P2 for conveying the second fluid through the apparatus 1 comprises a second primary fluid path P2p and a second secondary fluid path P2s. The second primary fluid path P2p extends through the second primary inlet port 18p, into the first interspaces I1 outside the first flow channels C1, through the respective second transfer hole 43 of every second one of the heat transfer plates, i.e. plates 7a, 7c,..., into the second primary sub channels C2P, through the second primary sub channels C2P, through the respective first transfer hole 41 of every second one of the heat transfer plates, i.e. plates 7a, 7c..., into the first interspaces I1 outside the first flow channels C1, and into the second primary outlet port 20p. The second secondary fluid path P2s extends through the second secondary inlet port 18s, into the first interspaces I1 outside the first flow channels C1, through the respective second transfer hole 43 of every second one of the heat transfer plates, i.e. plates 7b,..., into the second secondary sub channels C2S, through the second secondary sub channels C2S, through the respective first transfer hole 41 of every second one of the heat transfer plates, i.e. plates 7b,..., into the first interspaces I1 outside the first flow channels C1 and into the second secondary outlet port 20s.

With reference also to Figs. 5, 7b and 8, when the second fluid passes the second transfer hole 43 of the heat transfer plates 7, it is fed towards the solid outer portion 93 of the adjacent one of the electrode devices 9. The outer portion 93 and the electrode device gasket groove 91 of the electrode device 9 together with the second distribution area 53 of the heat transfer plate 7 transversally spreads the second fluid to achieve an even second fluid distribution inside the corresponding sub-assembly 5. More particularly, after the second fluid has passed the second transfer hole 43, it is transversally spread by being fed through the second primary distribution sub area 53a. When the second fluid approaches the second secondary distribution sub area 53b, it will be hindered by a restriction formed by a backside of the electrode device gasket groove 91 and a border of the second secondary distribution sub area 53b and, thus, further transversally spread. At the channels 69a' of the distribution recesses 69a, it will be easier for the second flow to enter the second secondary distribution sub area 53b. After the second fluid has entered the second secondary distribution sub area 53b, it is fed there though and further transversally spread. When the second fluid approaches the heat transfer area 45, it will be hindered by a restriction formed by a backside of the electrode device gasket groove 91 and another border of the second secondary distribution sub area 53b and, thus, further transversally spread. At the distribution recesses 69 it will be easier for the second fluid to enter heat transfer area 45.

When the second fluid, i.e. the electrolyte, is fed through the second flow channels C2, i.e. the second primary sub channels C2P and the second secondary sub channels C2S (Fig. 1b), as described above, more particularly across the heat transfer areas 45 of the adjacent heat transfer plates 7, water in the electrolyte is split into hydrogen and oxygen and a primary fraction is formed in the second primary sub channels C2P and a secondary fraction is formed in the second secondary sub channels C2S, one of the fractions containing more oxygen and less hydrogen than the other fraction. The primary fraction, just like the secondary fraction, is transversally collected by the electrode device gasket groove 91 and the solid outer portion 93 of the electrode device 9, together with the first distribution area 49 of the heat transfer plates 7, of the adjacent sub-assemblies 5, in a way that is essentially reverse as compared to the above described (slightly different since the distribution recesses 67 of the first secondary distribution sub area 49b lacks channels corresponding to the channels 69a'). Thereafter, the primary and secondary fractions are fed through the first transfer holes 41 of the heat transfer plates 7 to be separately discharged from the apparatus 1 via outlets not illustrated.

When electrolysis is performed in the second flow channels C2, heat is generated. In that the first fluid, i.e. the deionized water, is fed through the first flow channels C1, i.e. on both sides of the electrolysis channels C2, the heat generated through the electrolysis is effectively and uniformly diverted from the apparatus 1.

It should be noted that the second fluid is referred to as second fluid even if its characteristics changes when it is fed through the apparatus, and that both the primary fraction and the secondary fraction of the second fluid are referred to as second fluid even if their separate compositions vary and differ from each other and from the original second fluid.

It should be stressed that all components necessary to make the apparatus work properly, such as power sources, connections, wiring, control units, valves, pumps, gaskets, plates, sensors, pipes, dosing equipment, etc., are not described herein or illustrated in the figures. Further, characteristics of the different components of the apparatus which are not relevant to the present invention are not described or illustrated herein.

The above described embodiment of the present invention should only be seen as an example. A person skilled in the art realizes that the embodiment discussed can be varied in a number of ways without deviating from the inventive conception.

In the above described embodiment, the pins are integrally formed with the insulating layer, i.e. the rubber sheet, of the membrane gasket arrangement. In an alternative embodiment, one or more of the pins may instead be separate from the membrane gasket arrangement. In such an embodiment, the insulating layer of the membrane gasket arrangement may be provided with holes arranged to be aligned with the holes in the edge portion of the heat transfer plates. Further, the pins may be arranged to be inserted through the holes of the heat transfer plates and the insulating layer of the membrane gasket arrangement so as to form the cassette.

In the above described embodiment, each of the pins comprises one single component, more particularly a shaft with varying cross section along the longitudinal extension of the shaft. In alternative embodiments, one or more of the pins may comprise more than one component, for example a shaft with two "heads" at the ends, of which at least one of the "heads" may be connected to, and disconnected from, the shaft, possibly repeatedly and non-destructively. These "heads" may be portions of the pin having an outer dimension perpendicular to a longitudinal extension of the pin exceeding an inner dimension of the holes in the edge portion of the heat transfer plates, which portions lock the heat transfer plates and the membrane gasket arrangement together. The shaft may, or may not, be integrally formed with the insulating layer, possibly the rubber sheet, of the membrane gasket arrangement.

The pins may have any suitable configuration. As an example, the cross section of the pins need not be circular but may have any other suitable shape, such as oval, triangular, rectangular, etc.

In the above described embodiment, the electrode device has the shape of an integrally formed plate with parallel straight longitudinal outer edge portions and outwards bulging transverse outer edge portions, i.e. a plate with a "smooth" contour. In alternative embodiments, the electrode device could be configured differently. For example, it could be formed of separate components arranged to cooperate so as to form the electrode device. As a specific example, the center portion of the electrode device could be separately formed. Further, the outer portion and the gasket groove of the electrode device could be integrally formed in the shape of a "frame" arranged to receive the center portion. Additionally/alternatively, the electrode device could have other shapes and/or contours than described above. For example, instead of having a "smooth" contour, the electrode device could have a contour which, due to manufacturing or functional reasons which will not be discussed here, is locally recessed at one or more places.

In the above described embodiment, the outer portion of the electrode device is annular so as to completely surround the center portion of the electrode device. In alternative embodiments, the outer portion may be differently designed. As an example, it may be arranged to only partially surround the center portion. As a specific example, it may extend only on two opposite sides, e.g. the transverse sides, of the center portion.

In the above described embodiment, the electrode device has a smooth, i.e. a non-corrugated surface. In alternative embodiments, the electrode device could instead have an at least partly corrugated surface. As a specific example, the outer portion of the electrode plate could be corrugated at the back side due to manufacturing or functional reasons which will not be discussed here.

In the above described embodiment, the heat transfer plates are arranged to non-permanently engage with gaskets at the front side as well as the back side for sealing between the heat transfer plates and adjacent heat transfer plates in an apparatus. A heat transfer plate according to the invention could instead be arranged to be attached, with a permanent sealing, at the back side, to an adjacent heat transfer plate. On such a plate, a bottom of the back field gasket groove could extend in the second extreme plane, i.e. in so-called bottom plane.

In the above described embodiment, contact between adjacent pairs of heat transfer plates is prevented by the presence of the membrane gasket arrangements between the plate pairs, which membrane gasket arrangements comprise insulating sheets. In alternative embodiments, the insulating sheets, and possibly also other parts of the membrane gasket arrangements, could be omitted and the heat transfer plates could instead be suitably locally coated with insulating material to prevent contact between adjacent pairs of heat transfer plates.

The heat transfer plates may be pressed with other corrugation patterns than specified above. As an example, the heat transfer area of the heat transfer plate need not be pressed with a corrugation pattern of so-called herringbone type but could instead be pressed with a corrugation pattern comprising alternately arranged ridges and valleys extending essentially parallel to the longitudinal center axis of the heat transfer plate.

The electrode device may be fastened, possibly permanently, to the heat transfer plate by means of welding or other types of bonding, for example within the outer portion of the electrode device.

In the above described embodiment, the sub-assemblies, and, thus, the heat transfer plates, are "turned" in relation to each other in the apparatus. In other embodiments, and with suitable design amendments to the heat transfer and electrode devices, the heat transfer plates could instead be "rotated" or "flipped" in relation to each other. In a stack with "rotated" heat transfer plates, the heat transfer plates are arranged back side to front side, and every second heat transfer plate is turned upside down in relation to the rest of the heat transfer plates. In a stack with "flipped" heat transfer plates, the heat transfer plates are arranged front side to front side, and every second heat transfer plate is turned upside down in relation to the rest of the heat transfer plates.

In the above described embodiment, the cooling fluid is fed into the apparatus at the top, and out of the apparatus at the bottom. In an alternative embodiment, the cooling fluid could instead be fed into the apparatus at the bottom, and out of the apparatus at the top.

The heat transfer plate may be comprised in an apparatus used for another type of electrolysis than alkaline water electrolysis, for example chlor-alkali electrolysis. Further, the heat transfer plate may be comprised in an apparatus for other applications than electrolysis, for example an apparatus in the form of a fuel cell.

It should be stressed that the attributes first, second, third, ... , primary, secondary, and a, b, c, ... , etc. are used herein just to distinguish between species and not to express any kind of mutual order between, or attribute any special characteristics to, the species.

It should be stressed that "receiving", "feeding", "communicating" etc., throughout the text, means "receiving directly or indirectly" and "feeding directly or indirectly" and "communicating directly or indirectly", respectively.

Further, it should be stressed that herein, when it is said that, for example, detail A extends "along" detail B, detail A may extend immediately at, or at a distance from, detail B, parallel or not to detail B.

Above, when it is specified that a component, such as a plate portion, extends in a certain way, such as in a certain plane, it is the center, in a thickness direction, of the component that extends in this way.

It should be stressed that a description of details not directly relevant to the present invention has been omitted and that the figures are just schematic and not drawn according to scale. It should also be said that some of the figures have been more simplified than others. Therefore, some components may be illustrated in one figure but left out on another figure.

## Claims

1. An assembly (0) comprising two corrugated heat transfer plates (7) and a membrane gasket arrangement (4), each of the heat transfer plates (7) including a first end portion (19), an intermediate portion (21) and a second end portion (23) arranged in succession along a respective longitudinal center axis (LHT) of the heat transfer plate (7), each of the heat transfer plates (7) further comprising at least three portholes (25, 27, 29) arranged within the first end portion (19), at least three portholes (33, 35, 37) arranged within the second end portion (23), two transfer holes (41, 43) arranged on opposite sides of a respective transverse center axis (THT) of the heat transfer plate (7), a heat transfer area (45) arranged within the intermediate portion (21), and a membrane gasket arrangement groove (85) comprising an annular field groove portion (85a), which encloses the heat transfer area (45) and the transfer holes (41, 43), and at least six annular ring groove portions (85b) arranged on an outside of the field groove portion (85a) and enclosing a respective one of the portholes (25, 27, 29, 33, 35, 37), wherein the membrane gasket arrangement (4) comprises a membrane (6) and a gasket (10), which gasket (10) comprises an annular field gasket portion (10a) enclosing at least part of the membrane (6), and at least six annular ring gasket portions (10b), wherein the membrane gasket arrangement (4) is arranged between the two heat transfer plates (7), the field gasket portion (10a) of the membrane gasket arrangement (4) being accommodated in the field groove portion (85a) of the heat transfer plates (7), and the ring gasket portions (10b) of the membrane gasket arrangement (4) being accommodated in a respective one of the ring groove portions (85b) of the heat transfer plates (7), wherein the assembly (0) further comprises an insulating layer (8) extending at least on an outside of the field gasket portion (10a) and the ring gasket portions (10b) of the membrane gasket arrangement (4) to electrically insulate the heat transfer plates (7) from each other, **characterized in that** each of the heat transfer plates (7) has a plurality of holes (88) in an edge portion (61) arranged outside the membrane gasket arrangement groove (85), wherein the assembly (0) further comprises a plurality of insulating pins (90), each of the pins (90) extending through a respective one of said holes (88) of at least one of the two heat transfer plates (7) to fix the heat transfer plates (7) and the membrane gasket arrangement (4) in relation to each other.

2. An assembly (0) according to claim 1, wherein the insulating layer (8) comprises a sheet (8') forming part of the membrane gasket arrangement (4).

3. An assembly (0) according to any of the preceding claims, wherein at least a some of the pins (90) at least partly form part of the membrane gasket arrangement (4).

4. An assembly (0) according to any of the preceding claims, wherein at least some of the pins (90) are connected to the insulating layer (8).

5. An assembly (0) according to any of claims 1-2, wherein at least some of the pins are separate from the membrane gasket arrangement (4).

6. An assembly (0) according to any of the preceding claims, wherein at least some of the pins (90) project from the insulating layer (8) in one direction and at least some of the pins (90) project from the insulating layer (8) in another opposite direction.

7. An assembly (0) according to claim 6, wherein at least some of the pins (90) project from the insulating layer (8) in both said one direction and said another opposite direction.

8. An assembly (0) according to any of the preceding claims, wherein, for at least some of the pins (90), a portion (94) of the pin (90) has an outer dimension perpendicular to a longitudinal extension of the pin (90) that exceeds an inner dimension of said respective one of said holes (88) of at least one of the two heat transfer plates (7) where the pin (90) engages with said at least one of the two heat transfer plates (7).

9. An assembly (0) according to any of the preceding claims, wherein said portion (94) is integrally formed with the rest of the pin (90).

10. An assembly (0) according to any of claims 1-8, wherein said portion (94) is separate from the rest of the pin.

11. An assembly (0) according to any of the preceding claims, wherein the edge portion (61) of each of the heat transfer plates (7) is corrugated and comprises alternately arranged ridges (62) and valleys (64), the ridges (62) of the one of the heat transfer plates (7) facing the ridges (62) of the other one of the heat transfer plates (7), wherein said holes extend through the ridges (62).

12. An assembly (0) according to any of the preceding claims, further comprising two electrode devices (9), one of the electrode devices (9) being arranged between one of the heat transfer plates (7) and the membrane gasket arrangement (4) and the other one of the electrode devices (9) being arranged between the other one of the heat transfer plates (7) and the membrane gasket arrangement (4), wherein the portholes (25, 27, 29) within the first end portion (19) of the heat transfer plates (7) are arranged on one side of an imaginary first straight line (L1) extending perpendicular to said longitudinal center axis (LHT) while the electrode devices (9) are arranged on another side of said imaginary first straight line (L1), and wherein the portholes (33, 35, 37) within the second end portion (23) of the heat transfer plates (7) are arranged on one side of an imaginary second straight line (L2) extending perpendicular to said longitudinal center axis (LHT) while the electrode devices (9) are arranged on another side of said imaginary second straight line (L2).

13. An assembly (0) according to claim 12, wherein the field gasket portion (10a) of the membrane gasket arrangement (4) extend on an outside of the electrode devices (9).

14. An assembly (0) according to any of claims 12-13, further comprising a membrane gasket (12), wherein each of the electrode devices comprises an electrode gasket groove (91) accommodating the membrane gasket (12).

15. An assembly (0) according to any of the preceding claims, wherein a free end (92) of at least a plurality of the pins (90) is tapered in a direction away from the insulating layer (8).
